# EUROPÄISCHE PATENTSCHRIFT

(11) **EP 2 454 700 B1**
(45) Veröffentlichungstag und Bekanntmachung des Hinweises auf die Patenterteilung: **24.01.2018**
(21) Anmeldenummer: 10728243.6
(22) Anmeldetag: 05.07.2010
(51) Int. Cl.: G06F 21/34, G06F 21/41, H04L 29/06

(54) **VERFAHREN ZUR ERZEUGUNG EINES SOFT-TOKENS**
PROCESS TO CREATE A SOFT-TOKEN
PROCEDURE POUR CREER UN SOFT-TOKEN

(30) Priorität: 14.07.2009 DE 102009027682
(43) Veröffentlichungstag der Anmeldung: 23.05.2012
(73) Patentinhaber: Bundesdruckerei GmbH, 10958 Berlin (DE)
(72) Erfinder: DIETRICH, Frank, 12437 Berlin (DE)
(74) Vertreter: Richardt Patentanwälte PartG mbB
(86) Internationale Anmeldenummer: PCT/EP2010/059577
(87) Internationale Veröffentlichungsnummer: WO 2011/006790

(56) Entgegenhaltungen:
- EP-A2- 1 117 204
- DE-A1-102008 000 067
- US-A1- 2001 045 451
- BSI: "Technische Richtlinie eID-Server" 19. Mai 2009 (2009-05-19), Bundesamt für Sicherheit in der Informationstechnik , Bonn , XP002598177 , Seiten 1-49 Abschnitt 2.1 Abschnitte 2.2.1 und 2.2.2 Abschnitt 2.6 Abschnitt 4.3.3 Abschnitt 4.6 und 4.6.2 Anhang A
- M. Kain, G. Keller: "SAML 2.0, ein Tutorium- Teil 1: Theorie" Bd. 5/2007, 31. Mai 2007 (2007-05-31), Seiten 55-59, XP002598178 Gefunden im Internet: URL:http://www.acando.de/Global/GER/fachar tikel_ger/kain_keller_JS_05_07.pdf [gefunden am 2010-08-26]
- "Technical Guideline TR-03110 Advanced Security Mechanisms for Machine Readable Travel Documents . Extended Access Control (EAC)" INTERNET CITATION 21. Februar 2008 (2008-02-21), Seiten 1-59, XP002565917 Gefunden im Internet: URL:https://www.bsi.bund.de/cae/servlet/co ntentblob/475682/publicationFil e/30616/TR-03110_v111_pdf.pdf [gefunden am 2010-01-25]
- "Information technology - Open Systems Interconnection - The Directory: Public-key and attribute certificate frameworks; X.509 (08/05)" ITU-T STANDARD IN FORCE (I), INTERNATIONAL TELECOMMUNICATION UNION, GENEVA, CH, Nr. X.509 (08/05), 29. August 2005 (2005-08-29), XP017405086

## Beschreibung

Die Erfindung betrifft ein Verfahren zur Erzeugung eines Soft-Tokens, ein Computerprogrammprodukt, einen ID-Token sowie ein Computersystem.

Aus dem Stand der Technik sind verschiedene Verfahren zur Verwaltung der so genannten digitalen Identität eines Benutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus US 2007/0294431 A1 ist ein weiteres Verfahren zur Verwaltung der digitalen Identitäten bekannt, welches ebenfalls eine Nutzerregistrierung erfordert.

Token-basierte Authentifizierungsverfahren sind in den zum Anmeldezeitpunkt unveröffentlichten Patentanmeldungen DE 10 2008 000 067.1-31, DE 10 2008 040 416.0-31, DE 10 2008 042 262.2-31 und DE 10 2009 026 953.3 derselben Patentanmelderin offenbart.

Die Technische Richtlinie für eID-Server, TR-03130, beschreibt die Nutzung von elektronischen Ausweisen als Sicherheitstoken und das gesicherte Auslesen von einzelnen Attributen durch einen eID-Server. Der Erfindung liegt demgegenüber die Aufgabe zugrunde, ein verbessertes Verfahren zur Erzeugung eines Soft-Tokens zu schaffen, sowie ein entsprechendes Computerprogrammprodukt, einen ID-Token und ein Computersystem.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Nach Ausführungsformen der Erfindung wird ein Verfahren zum Lesen zumindest eines in einem ID-Token gespeicherten Attributs geschaffen, wobei der ID-Token einem Nutzer zugeordnet ist. Das Verfahren beinhaltet die folgenden Schritte: Authentifizierung des Nutzers gegenüber dem ID-Token; Authentifizierung eines ersten Computersystems gegenüber dem ID-Token; nach erfolgreicher Authentifizierung des Nutzers und des ersten Computersystems gegenüber dem ID-Token, Übertragung des zumindest einen in dem ID-Token gespeicherten Attributs zu dem ersten Computersystem, Erzeugung eines ersten Soft-Tokens durch Signierung des zumindest einen aus dem ID-Token gelesenen Attributs durch das erste Computersystem, Senden des ersten Soft-Tokens zu einem Gerät. Hierdurch kann ein "Vertrauensanker" geschaffen werden.

Ausführungsformen der Erfindung ermöglichen das Lesen eines oder mehrerer der in einem ID-Token gespeicherten Attribute durch das erste Computersystem, wobei die Verbindung zwischen dem ID-Token und dem ersten Computersystem über ein Netzwerk, insbesondere das Internet, aufgebaut werden kann. Bei dem zumindest einem Attribut kann es sich um eine Angabe bezüglich der Identität des dem ID-Token zugeordneten Nutzers handeln, insbesondere bezüglich dessen so genannter digitaler Identität. Beispielsweise werden durch das erste Computersystem die Attribute Name, Vorname, Adresse gelesen, um hierfür den ersten Soft-Token zu erzeugen.

Es kann aber zum Beispiel auch nur ein einzelnes Attribut gelesen werden, welches nicht zur Feststellung der Identität des Nutzers, sondern beispielsweise zur Überprüfung der Berechtigung des Benutzers zur Inanspruchnahme eines bestimmten Online-Dienstes dient, wie zum Beispiel das Alter des Nutzers, wenn dieser einen Online-Dienst in Anspruch nehmen möchte, der einer bestimmten Altersgruppe vorbehalten ist, oder ein anderes Attribut, welches die Zugehörigkeit des Nutzers zu einer bestimmten Gruppe dokumentiert, welche zur Nutzung des Online-Dienstes berechtigt ist.

Bei dem ID-Token kann es sich um ein tragbares elektronisches Gerät, wie zum Beispiel einen so genannten USB-Stick, handeln oder um ein Dokument, insbesondere ein Wert- oder Sicherheitsdokument.

Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Unter einem "Soft-Token" wird hier insbesondere ein von einer vertrauenswürdigen Instanz signierter Datensatz verstanden, der ein oder mehrere Attribute beinhaltet.

Voraussetzung für das Lesen eines Attributs aus dem Soft-Token kann eine vorherige Authentifizierung gegenüber dem Soft-Token sein. Hierzu kann der Soft-Token so ausgebildet sein, dass zunächst eine Kennung, wie zum Beispiel ein Passwort, eine PIN oder eine TAN, eingegeben werden muss, bevor auf den Soft-Token ein Lesezugriff stattfinden kann. Ein solcher Soft-Token wird auch als virtueller Token bezeichnet.

Unter einem "Gerät" werden hier elektronische Geräte, insbesondere stationäre oder mobile Computer, insbesondere mobile Endgeräte bezeichnet, insbesondere Geräte mit einer Kommunikations-Schnittstelle zum Empfang des ersten Soft-Tokens und/oder zur Kommunikation mit einem Dienst-Computersystem. Insbesondere kann das Gerät einen Internetbrowser aufweisen, über den ein Nutzer eine Dienst-Anforderung an das Dienst-Computersystem richten kann. Beispielsweise kann es sich bei einem Gerät um ein mobiles Gerät mit einer Mobilfunk-Schnittstelle, wie zum Beispiel ein Mobiltelefon, einen tragbaren Computer, ein Smartphone oder einen Personal Digital Assistant (PDA) handeln.

Ausführungsformen der Erfindung sind also besonders vorteilhaft, da das zumindest eine Attribut aus einem besonders vertrauenswürdigen Dokument, beispielsweise einem amtlichen Dokument, ausgelesen wird. Von besonderem Vorteil ist weiterhin, dass eine zentrale Speicherung der Attribute nicht erforderlich ist. Ausführungsformen der Erfindung ermöglichen also ein besonders hohes Maß an Vertrauenswürdigkeit hinsichtlich der Mitteilung der zu einer digitalen Identität gehörenden Attribute, verbunden mit einem optimalen Datenschutz bei äußerst bequemer Handhabung.

Nach einer Ausführungsform der Erfindung hat das erste Computersystem zumindest ein Zertifikat, welches zur Authentifizierung des ersten Computersystems gegenüber dem ID-Token verwendet wird. Das Zertifikat beinhaltet eine Angabe derjenigen Attribute, für welche das erste Computersystem eine Leseberechtigung hat. Der ID-Token prüft anhand dieses Zertifikats, ob das erste Computersystem die erforderliche Leseberechtigung für den Lesezugriff auf das Attribut hat, bevor ein solcher Lesezugriff durch das erste Computersystem durchgeführt werden kann.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Beispielsweise kann das Zertifikat dem Standard X.509 oder einem anderen Standard entsprechen.

Nach einer Ausführungsform der Erfindung sendet das erste Computersystem den ersten Soft-Token unmittelbar an das Gerät. Das Gerät kann aus dem ersten Soft-Token einen zweiten Soft-Token erzeugen, eine Teilmenge der Attribute des ersten Soft-Tokens beinhaltet. Das Gerät kann den zweiten Soft-Token oder eine Kopie des ersten Soft-Tokens an ein zweites Computersystem senden. Bei dem zweiten Computersystem kann es sich zum Beispiel um einen Server zur Erbringung eines Online-Dienstes oder eines sonstigen Dienstes, wie zum Beispiel einer Bankdienstleistung oder zur Bestellung eines Produkts handeln. Beispielsweise kann der Nutzer ein Konto online eröffnen, wozu Attribute, die die Identität des Nutzers beinhalten, an das zweite Computersystem einer Bank übertragen werden.

Nach einer Ausführungsform der Erfindung erfolgt die Übertragung des ersten Soft-Tokens von dem ersten Computersystem zunächst über ein drittes Computersystem des Nutzers an den ID-Token über eine Verbindung mit Ende-zu-Ende Verschlüsselung. Alternativ kann sich der Nutzer den ersten Soft-Token von dem ersten Computersystem unmittelbar auf das das dritte Computersystem mit Hilfe eines üblichen Internetbrowsers herunterladen.

Nach einer Ausführungsform der Erfindung kann das zweite Computersystem auf eine Dienst-Anforderung des Geräts diejenigen Attribute, zum Beispiel des Nutzers oder seines ID-Tokens, welche es für die Erbringung des Dienstes oder die Annahme der Bestellung benötigt, spezifizieren. Die entsprechende Attributspezifikation, die die Spezifizierung dieser Attribute beinhaltet, wird sodann von dem zweiten Computersystem an das Gerät gesendet.

Nach einer Ausführungsform der Erfindung wird der erste Soft-Token von dem ersten Computersystem an das dritte Computersystem übertragen. Der Nutzer des dritten Computersystems kann die in dem ersten Soft-Token beinhalteten Attribute lesen, ohne sie jedoch verändern zu können. Erst nach Freigabe durch den Nutzer wird der erste Soft-Token von dem dritten Computersystem an das Gerät weitergeleitet.

Nach einer Ausführungsform der Erfindung kann der Nutzer die Attribute des ersten Soft-Tokens vor deren Weiterleitung durch weitere Daten ergänzen.

Nach einer Ausführungsform der Erfindung hat das erste Computersystem mehrere Zertifikate mit verschiedenen Leserechten. Aufgrund des Empfangs eines Signals mit einer Attributspezifikation wählt das erste Computersystem eines oder mehrere dieser Zertifikate aus, um die entsprechenden Attribute aus dem ID-Token oder mehreren verschiedenen ID-Token auszulesen.

Nach einer Ausführungsform der Erfindung empfängt das erste Computersystem von dem dritten Computersystem des Nutzers ein Signal. Durch das Signal wird dem ersten Computersystem signalisiert, dass ein erster Soft-Token für den ID-Token des Nutzers generiert werden soll. Das Signal kann eine erste Attributspezifizierung beinhalten, in der diejenigen Attribute des ID-Tokens spezifiziert sind, für die der erste Soft-Token erzeugt werden soll. Ferner kann in dem Signal auch die Adresse des Geräts angegeben sein, an das der erste Soft-Token übertragen werden soll. Bei dieser Adresse kann es sich zum Beispiel um eine Telefonnummer des Geräts oder eine E-Mail-Adresse handeln.

Aufgrund des Empfangs dieses Signals werden die Attribute von dem ID-Token an das erste Computersystem übertragen, nachdem sich der Nutzer gegenüber dem ID-Token authentifiziert hat und nachdem eine gegenseitige Authentifizierung des ID-Tokens und des ersten Computersystems stattgefunden hat. Die Übertragung der Attribute von dem ID-Token an das erste Computersystem erfolgt vorzugsweise über eine Verbindung mit Ende-zu-Ende-Verschlüsselung.

Beispielsweise erfolgt die gegenseitige Authentifizierung des ID-Tokens und des ersten Computersystems nach einem Challenge-Response-Verfahren. Aus einer für die Durchführung eines solchen Challenge-Response-Verfahrens verwendeten Challenge wird ein symmetrischer Schlüssel abgeleitet, der für die Ende-zu-Ende-Verschlüsselung der Verbindung verwendet wird, um hierüber die Attribute zu übertragen.

Nach einer Ausführungsform der Erfindung werden die von dem ID-Token empfangenen Attribute von dem ersten Computersystem mit einem Zeitstempel versehen. Dieser Zeitstempel kann den Empfangszeitpunkt oder einen Sendezeitpunkt der Attribute angeben. Vorzugsweise gibt der Zeitstempel eine maximale Gültigkeitsdauer an.

Vorzugsweise wird jedes einzelne der Attribute mit einem solchen Zeitstempel versehen. Die Verkettung eines einzelnen Attributs mit dessen Zeitstempel wird jeweils separat signiert. Die signierten zeitgestempelten Attribute werden dann zu dem ersten Soft-Token zusammengefasst. Für den ersten Soft-Token kann durch das erste Computersystem z.B. eine TAN-Liste generiert werden. Die TAN-Liste wird dem Nutzer beispielsweise per Post in Form eines Ausdrucks oder auf elektronischem Wege, wie zum Beispiel per SMS oder per E-Mail übermittelt oder der Nutzer kann sich die TAN-Liste von einer Web-Seite des ersten Computersystems herunterladen.

Nach einer Ausführungsform der Erfindung wird der erste Soft-Token von dem ersten Computersystem unmittelbar an das Gerät gesendet. In dem Gerät wird der erste Soft-Token gespeichert. Alternativ wird der erste Soft-Token von dem ersten Computersystem zunächst an das dritte Computersystem übertragen. Von dem dritten Computersystem kann der erste Soft-Token dann an das Gerät übertragen werden, wobei der Nutzer die Möglichkeit zur vorherigen Freigabe der Übertragung und/oder zur Ergänzung des ersten Soft-Tokens um weiter Informationen hat. Von besonderem Vorteil ist hierbei, dass das Gerät keine Schnittstelle für den ID-Token haben muss, sondern nur eine Kommunikations-Schnittstelle, mit der das Gerät den ersten Soft-Token empfangen kann.

Nach einer Ausführungsform der Erfindung kann der Nutzer einen von dem zweiten Computersystem, d.h. dem Dienst-Computersystem, angebotenen Dienst mit Hilfe seines Geräts nutzen, beispielsweise über das Internet. Hierzu startet der Nutzer einen Internetbrowser seines Geräts und gibt die URL einer Web-Seite des zweiten Computersystems ein. Auf dieser Web-Seite wählt der Nutzer einen gewünschten Dienst aus und betätigt auf seinem Gerät eine Eingabetaste, sodass eine entsprechende Dienst-Anforderung von dem Gerät an das zweite Computersystem übertragen wird. Auf diese Dienst-Anforderung antwortet das zweite Computersystem mit einer Attributspezifizierung, in der diejenigen Attribute angegeben sind, die das zweite Computersystem benötigt, um den angeforderten Dienst erbringen zu können.

Das Gerät greift dann auf den ersten Soft-Token zu und liest diejenigen signierten und zeitgestempelten Attribute aus dem ersten Soft-Token aus, die durch die Attributspezifizierung des zweiten Computersystems gegeben sind. Hierbei kann es sich um sämtliche Attribute des ersten Soft-Tokens oder eine Teilmenge dieser Attribute handeln. Diese signierten und zeitgestempelten Attribute werden in einen zweiten Soft-Token eingebracht, der von dem Gerät an das zweite Computersystem übertragen wird. Eine Voraussetzung für das Senden des zweiten Soft-Tokens kann sein, dass sich der Nutzer zuvor gegenüber dem ersten Soft-Token über das Gerät authentifizieren muss, beispielsweise indem der Nutzer eine Kennung, insbesondere eine der TANs von seiner TAN-Liste, in das Gerät eingeben muss.

Nach einer Ausführungsform der Erfindung prüft das zweite Computersystem nach dem Empfang des zweiten Soft-Tokens die Validität der Signaturen der Attribute. Ferner prüft das zweite Computersystem, ob sich der zweite Soft-Token noch innerhalb seiner Gültigkeitsdauer befindet, die durch die Zeitstempel der Attribute gegeben ist. Wenn sowohl die Signaturen valide sind als auch die Gültigkeitsdauer nicht überschritten ist, so erbringt das zweite Computersystem den angeforderten Dienst, sofern die Attribute die hierzu erforderlichen Kriterien erfüllen.

Ausführungsformen der Erfindung sind besonders vorteilhaft, da durch das erste Computersystem kein Profil hinsichtlich der Nutzung des ersten Soft-Tokens erstellt werden kann, da die Nutzung des Soft-Tokens nicht gegenüber dem ersten Computersystems signalisiert werden muss. Vielmehr findet die Nutzung des ersten Soft-Tokens zwischen dem Gerät und dem zweiten Computersystem statt.

In einem weiteren Aspekt betrifft die Erfindung ein Computerprogrammprodukt, insbesondere ein digitales Speichermedium, mit ausführbaren Programminstruktionen zur Durchführung eines erfindungsgemäßen Verfahrens.

In einem weiteren Aspekt betrifft die Erfindung einen ID-Token mit einem geschützten Speicherbereich zur Speicherung von zumindest einem Attribut, mit Mitteln zur Authentifizierung eines dem ID-Token zugeordneten Nutzers gegenüber dem ID-Token, Mitteln zur Authentifizierung eines ersten Computersystems gegenüber dem ID-Token, Mitteln zum Aufbau einer geschützten Verbindung zu dem ersten Computersystem, über die das erste Computersystem das zumindest eine Attribut auslesen kann, Mitteln zum Empfang eines ersten Soft-Tokens über die geschützte Verbindung von dem ersten Computersystem, wobei der erste Soft-Token das zumindest eine Attribut beinhaltet, Mitteln zur Ausgabe des ersten Soft-Tokens, wobei eine notwendige Voraussetzung für das Auslesen des zumindest einen Attributs aus dem ID-Token durch das erste Computersystem die erfolgreiche Authentifizierung des Nutzers und des ersten Computersystems gegenüber dem ID-Token ist.

Nach einer Ausführungsform der Erfindung wird der erste Soft-Token in einem Speicherbereich des ID-Tokens abgespeichert, auf den ein externer Lesezugriff über die Schnittstelle des ID-Tokens stattfinden kann. Beispielsweise kann der erste Soft-Token von dem dritten Computersystem, d.h. dem Nutzer-Computersystem, ausgelesen werden und von dem dritten Computersystem an das Gerät übertragen werden.

Zusätzlich zu der Authentifizierung des ersten Computersystems gegenüber dem ID-Token, wie sie an sich zum Beispiel als so genannte Extended Access Control für maschinenlesbare Reisedokumente (machine-readable travel documents - MRTD) bekannt und von der internationalen Luftfahrtbehörde ICAO spezifiziert ist, muss sich also der Nutzer gegenüber dem ID-Token authentifizieren. Beispielsweise wird durch eine erfolgreiche Authentifizierung des Nutzers gegenüber dem ID-Token dieser freigeschaltet, sodass die weiteren Schritte, nämlich die Authentifizierung des ersten Computersystems gegenüber dem ID-Token und/oder der Aufbau einer geschützten Verbindung zum Auslesen der Attribute, ablaufen können.

Nach einer Ausführungsform der Erfindung hat der ID-Token Mittel für eine Ende-zu-Ende-Verschlüsselung. Dies ermöglicht es, die Verbindung zwischen dem ID-Token und dem ersten Computersystem über ein drittes Computersystem des Nutzers aufzubauen, da der Nutzer aufgrund der Ende-zu-Ende-Verschlüsselung keine Änderungen der über die Verbindung übertragenen Daten vornehmen kann.

In einem weiteren Aspekt betrifft die Erfindung ein erstes Computersystem mit Mitteln zum Empfang eines Signals, Mitteln zur Authentifizierung gegenüber einem ID-Token, Mitteln zum Empfang zumindest eines Attributs aus dem ID-Token über eine geschützte Verbindung, Mitteln zum Zeitstempeln des zumindest einen Attributs, Mitteln zur Erzeugung eines ersten Soft-Tokens, der das zumindest eine signierte zeitgestempelte Attribut beinhaltet, Mitteln zum Senden des ersten Soft-Tokens, wobei der Empfang des zumindest einen Attributs voraussetzt, dass sich ein dem ID-Token zugeordneter Nutzer und das Computersystem gegenüber dem ID-Token authentifiziert haben.

Nach einer Ausführungsform der Erfindung kann das erste Computersystem Mittel zur Generierung einer Aufforderung an den Nutzer beinhalten. Nachdem das erste Computersystem das Signal empfangen hat, sendet es daraufhin eine Aufforderung an das dritte Computersystem des Nutzers, sodass der Nutzer dazu aufgefordert wird, sich gegenüber dem ID-Token zu authentifizieren. Nachdem die Authentifizierung des Nutzers gegenüber dem ID-Token erfolgreich durchgeführt worden ist, erhält das erste Computersystem von dem dritten Computersystem eine Bestätigung. Daraufhin authentifiziert sich das erste Computersystem gegenüber dem ID-Token und es wird eine sichere Verbindung zwischen dem ID-Token und dem ersten Computersystem mit einer Ende-zu-Ende-Verschlüsselung aufgebaut.

Nach einer Ausführungsform der Erfindung hat das erste Computersystem mehrere Zertifikate, die jeweils unterschiedliche Leserechte spezifizieren. Nach Empfang Signals mit der Attributspezifikation wählt das erste Computersystem zumindest eines dieser Zertifikate mit den zum Lesen der spezifizierten Attribute ausreichenden Leserechten.

Ausführungsformen des erfindungsgemäßen ersten Computersystems sind besonders vorteilhaft, da sie in Kombination mit der Notwendigkeit der Authentifizierung des Nutzers gegenüber dem ID-Token einen Vertrauensanker für die unverfälschte digitale Identität des Nutzers bilden. Hierbei ist von besonderem Vorteil, dass dies keine vorherige Registrierung des Nutzers gegenüber dem Computersystem erfordert sowie auch keine zentrale Speicherung der die digitalen Identitäten bildenden Attribute der Nutzer.

Nach einer Ausführungsform der Erfindung handelt es sich bei dem Computersystem um ein behördlich zertifiziertes Trust-Center, insbesondere ein Signaturgesetzkonformes Trust-Center.

Im Weiteren werden Ausführungsformen der Erfindung mit Bezugnahme auf die Zeichnungen näher erläutert. Es zeigen:
- Figur 1: ein Blockdiagramm einer ersten Ausführungsform erfindungsgemäßer Computersysteme betreffend die Erzeugung und Übertragung des ersten Soft-Tokens an ein Gerät,
- Figur 2: ein Blockdiagramm der ersten Ausführungsform erfindungsgemäßer Computersysteme betreffend die Verwendung des ersten Soft-Tokens,

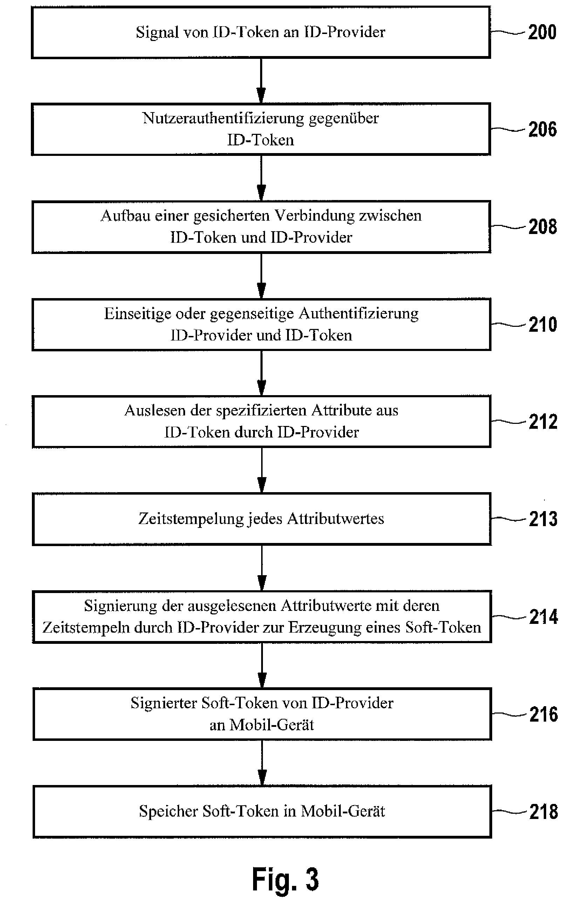

- Figur 3: ein Flussdiagramm einer Ausführungsform eines erfindungsgemäßen Verfahrens betreffend die Erzeugung und Übertragung des ersten Soft-Tokens an ein Gerät,
- Figur 4: ein Flussdiagramm einer Ausführungsform eines erfindungsgemäßen Verfahrens betreffend die Verwendung des ersten Soft-Tokens..

Elemente der nachfolgenden Ausführungsformen, die einander entsprechen, werden mit denselben Bezugszeichen gekennzeichnet.

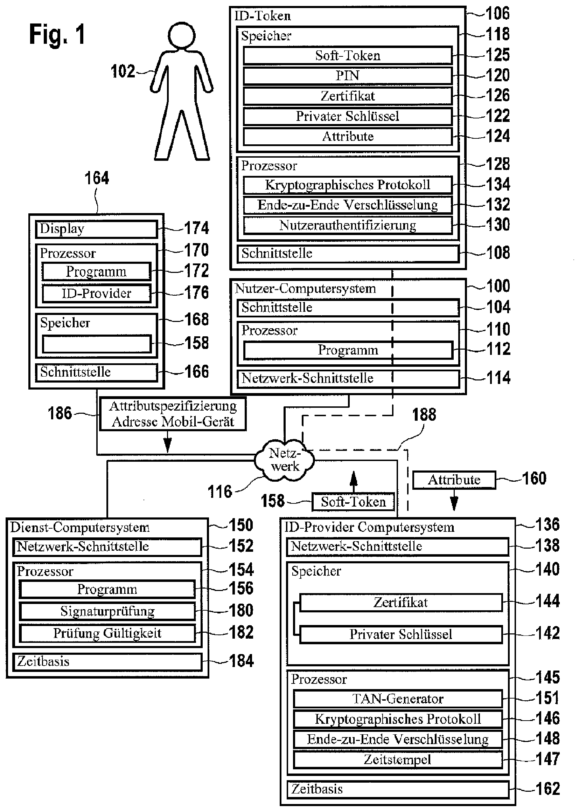

Die Figur 1 zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 100 hat eine Schnittstelle 104 zur Kommunikation mit einem ID-Token 106, der eine entsprechende Schnittstelle 108 aufweist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der ID-Token 106 hat ferner einen Speicherbereich 125 zur Speicherung des ersten Soft-Tokens 158. Hierbei handelt es sich beispielsweise um einen Speicherbereich eines Massenspeichers des ID-Tokens, auf den über die Schnittstelle 108 extern zugegriffen werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüsse! verwendet werden, der beispielsweise anlässlich der Ausführung des kryptographischen Protokolls zwischen dem ID-Token 106 und dem ID-Provider-Computersystem 136 vereinbart wird.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Der Prozessor 145 dient ferner zur Ausführung von Programminstruktionen 147, die zur Zeitstempelung der von dem ID-Token empfangenen Attribute 160 dienen. Hierzu wird durch Ausführung der Programminstruktionen 147 auf eine Zeitbasis 162 des ersten Computersystems 136 zugegriffen. Die Zeitbasis 162 liefert beispielsweise die aktuelle Uhrzeit, beispielsweise als Unix-Zeit. Zu der aktuellen Uhrzeit wird ein Zeitintervall von zum Beispiel einigen Tagen hinzuaddiert, sodass sich die maximale Gültigkeitsdauer ergibt. Mit dieser Gültigkeitsdauer werden die Attribute 160 jeweils einzeln zeitgestempelt. Die zeitgestempelten Attribute werden dann separat mit Hilfe des Zertifikats 144 und des privaten Schlüssels 142 von dem ID-Provider-Computersystem 136 signiert. Die zeitgestempelten und signierten Attribute 160 werden dann in dem Soft-Token 158 zusammengefasst.

Der Prozessor 145 dient ferner zur Ausführung von Programminstruktionen 151. Durch Ausführung der Programminstruktionen 151 werden eine oder mehrere Kennungen für den Soft-Token 158 generiert. Hierbei kann es sich um ein Passwort, eine PIN oder eine TAN-Liste handeln. Als Voraussetzung für eine Verwendung des Soft-Tokens 158 als eine Datenquelle muss in diesem Fall zunächst die Kennung eingegeben werden, damit sich der Nutzer gegenüber dem Soft-Token authentifiziert.

Das ID-Provider-Computersystem 136 kann an einen Drucker gekoppelt sein, der die Kennung bzw. die Kennungen ausdruckt. Der Ausdruck wird dann an den Nutzer 102 zum Beispiel per Post versendet, insbesondere als ein sogenannter PIN- oder TAN-Brief. Alternativ oder zusätzlich können die einen oder mehreren Kennungen an den Nutzer 102 auf elektronischem Wege übertragen werden, wie zum Beispiel per SMS und E-Mail. Alternativ oder zusätzlich kann die zumindest eine Kennung auf einer Web-Seite des ersten Computersystems 136 zum Herunterladen durch den Nutzer 102 bereitgestellt werden.

Der Nutzer 102 verfügt ferner über ein Gerät 164, wie zum Beispiel ein sogenanntes Handy oder Smartphone. Das Gerät 164 hat eine Schnittstelle 166 zur Kommunikation über das Netzwerk 116. Bei der Schnittstelle 166 kann es sich insbesondere um eine Mobilfunk-Schnittstelle für ein digitales zellulares Mobilfunk-Netzwerk handeln. Insbesondere kann die Schnittstelle 166 zur Ausführung eines mobilen Internetprotokolls ausgebildet sein, sodass der Nutzer 102 mit Hilfe des Geräts 164 das Internet nutzen kann.

Das Mobilfunkgerät 164 hat einen elektronischen Speicher 168 zur Speicherung des Soft-Tokens 158. Dieser Speicher kann einen integralen Bestandteil des Geräts 164 bilden. Der Speicher 164 kann aber auch Teil einer SIM-Karte des Geräts 164 sein. Dies hat den Vorteil, dass der Nutzer 102 den Soft-Token 158 bequem für verschiedene Geräte verwenden kann.

Das Gerät 164 hat einen Prozessor 170 zur Ausführung von Programminstruktionen 172, durch die insbesondere ein Internetbrowser und eine Nutzer-Schnittstelle implementiert sein können. Zu der Nutzer-Schnittstelle gehört eine Anzeige 174 des Geräts 164.

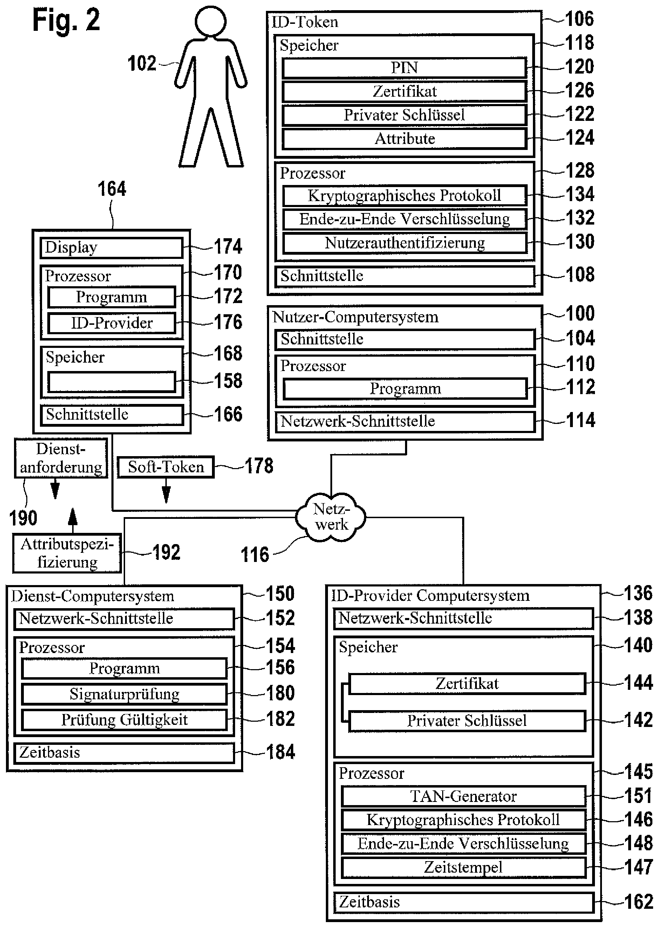

Der Prozessor 170 dient ferner zur Ausführung von Programminstruktionen 176, durch die eine ID-Provider-Funktionalität realisiert wird. Insbesondere dienen die Programminstruktionen 176 zur Erzeugung eines zweiten Soft-Tokens 178 (vgl. Figur 2) aus dem ersten Soft-Token 158.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 mit Hilfe seines Geräts 164 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Produkt erwerben kann. Ferner kann das Dienst-Computersystem 150 auch zur Lieferung von digitalen Inhalten ausgebildet sein, beispielsweise für den Download von Musik- und/oder Videodaten.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 ein oder mehrere Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem ID-Token 106 ersetzt.

Je nach Anwendungsfall muss der Nutzer 102 aber nicht seine Identität gegenüber dem Dienst-Computersystem 150 offenbaren, sondern es reicht die Mitteilung, zum Beispiel nur eines der Attribute aus. Beispielsweise kann der Nutzer 102 über eines der Attribute einen Nachweis erbringen, dass er zu einer bestimmten Personengruppe gehört, die zugangsberechtigt für auf dem Dienst-Computersystem 150 zum Download bereitgehaltener Daten ist. Beispielsweise kann ein solches Kriterium ein Mindestalter des Nutzers 102 sein oder die Zugehörigkeit des Nutzers 102 zu einem Personenkreis, der auf bestimmte vertrauliche Daten eine Zugriffsberechtigung hat.

Der Prozessor 154 des Dienst-Computersystems 150 dient ferner zur Ausführung von Programminstruktionen 180 und 182. Ferner verfügt das Dienst-Computersystem 150 über eine Zeitbasis 184, die zu der Zeitbasis 162 des ID-Provider-Computersystems 136 synchron ist.

Durch Ausführung der Programminstruktionen 180 kann die Validität einer Signatur durch das Dienst-Computersystem 150 geprüft werden, insbesondere die Validität der Signaturen der zeitgestempelten Attribute des Soft-Tokens 178. Durch Ausführung der Programminstruktionen 182 kann das Dienst-Computersystem 150 ferner prüfen, ob die durch die Zeitstempel der Attribute gegebene Gültigkeitsdauer noch nicht überschritten ist.

Zur Erzeugung des Soft-Tokens 158 und dessen Übertragung an das Gerät 164 wird wie folgt vorgegangen:
1. Authentifizierung des Nutzers 102 gegenüber dem ID-Token 106.
   Der Nutzer 102 authentifiziert sich gegenüber dem ID-Token 106. Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
2. Authentifizierung des ID-Provider-Computersystems 136 gegenüber dem ID-Token 106.
   Hierzu wird eine Verbindung 188 zwischen dem ID-Token 106 und dem ID-Provider-Computersystem 136 über das Nutzer-Computersystem 100 und das Netzwerk 116 hergestellt. Beispielsweise überträgt das ID-Provider-Computersystem 136 sein Zertifikat 144 über diese Verbindung an den ID-Token 106. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung an das ID-Provider-Computersystem 136 gesendet. Das ID-Provider-Computersystem 136 entschlüsselt das Chiffrat mit Hilfe seines privaten Schlüssels 142 und erhält so die Zufallszahl. Die Zufallszahl sendet das ID-Provider-Computersystem 136 über die Verbindung an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.
3. Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erhält das ID-Provider-Computersystem 136 eine Leseberechtigung zum Auslesen, eines, mehrerer oder aller der in dem geschützten Speicherbereich 124 gespeicherten Attribute. Aufgrund eines entsprechenden Lesekommandos, welches das ID-Provider-Computersystem 136 über die Verbindung an den ID-Token 106 sendet, werden die angeforderten Attribute aus dem geschützten Speicherbereich 124 ausgelesen und durch Ausführung der Programminstruktionen 132 verschlüsselt. Die verschlüsselten Attribute 160 werden über die Verbindung an das ID-Provider-Computersystem 136 übertragen und dort durch Ausführung der Programminstruktionen 148 entschlüsselt. Dadurch erhält das ID-Provider-Computersystem 136 Kenntnis der aus dem ID-Token 106 ausgelesenen Attribute 160.
   Die Ausführung der oben genannten Schritte 1 bis 3 wird beispielsweise durch ein Signal 186 ausgelöst, das von dem Nutzer-Computersystem 100 an das ID-Provider-Computersystem 136 gesendet wird. Beispielsweise gibt der Nutzer 102 in das Nutzer-Computersystem 100 ein Kommando zur Generierung des Soft-Tokens 158 für sein Gerät 164 ein, woraufhin das Signal 186 durch Ausführung der Programminstruktionen 112 generiert und über die Netzwerk-Schnittstelle 114 an das ID-Provider-Computersystem 136 gesendet wird. Das Signal 186 kann eine erste Attributspezifizierung beinhalten, in der angegeben ist, welche der in dem Speicherbereich 124 gespeicherten Attribute in die Erzeugung des Soft-Tokens 158 eingehen sollen. Beinhaltet das Signal 186 eine solche Attributspezifizierung nicht, so können je nach Ausführungsform vordefinierte Attribute oder alle Attribute, die in dem Speicherbereich 124 gespeichert sind, in die Erzeugung des Soft-Tokens 158 eingehen.
   Zusätzlich kann das Signal 186 eine Adresse des Geräts 164 beinhalten, wie zum Beispiel dessen Telefonnummer.
4. Nachdem Empfang der Attribute 160 werden diese separat mit einem Zeitstempel versehen, der beispielsweise die Gültigkeitsdauer angibt, und zwar durch Ausführung der Programminstruktionen 147. Die zeitgestempelten Attribute 160 werden dann separat von dem ID-Provider-Computersystem 136 mit Hilfe des Zertifikats 144 und des privaten Schlüssels 142 signiert und in dem Soft-Token 158 zusammengefasst. Der Soft-Token 158 kann so erzeugt werden, dass dessen Verwendung als Datenquelle eine vorherige NutzerAuthentifizierung mit Hilfe einer Kennung voraussetzt, die durch Ausführung der Programminstruktionen 151 erzeugt und dem Nutzer 102 übermittelt wird.
   Je nach Ausführungsform wird der Soft-Token 158 über die geschützte Verbindung 188 von dem ID-Provider-Computersystem 136 an den ID-Token 106 übertragen und dort in dem Speicherbereich 125 gespeichert. Das Nutzer-Computersystem 100 kann mit Hilfe der Schnittstelle 104 auf diesen Speicherbereich 125 zugreifen, um den Soft-Token 158 von dort auszulesen und über die Netzwerk-Schnittstelle 114 an das Gerät 164 übertragen, wo der Soft-Token 158 in den Speicher 168 gespeichert wird.
   Die Übertragung des Soft-Tokens 158 von dem ID-Provider-Computersystem 136 an das Gerät 164 kann aber auch unmittelbar an die Adresse des Geräts erfolgen, wie zum Beispiel durch Versendung einer SMS an die Telefonnummer des Geräts oder durch Versendung einer E-Mail an eine E-Mail-Adresse des Geräts.

Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass die erforderliche Sicherheit besteht, dass die in dem Soft-Token 158 beinhalteten Attribute zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

In dem ersten Fall ist der ID-Token 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Von besonderem Vorteil ist die Nutzbarmachung des ID-Tokens 106 für zum Beispiel E-Commerce und E-Government-Anwendungen, und zwar medienbruchfrei und rechtssicher aufgrund des durch die Notwendigkeit der Authentifizierung des Nutzers 102 und des ID-Provider-Computersystems 136 gegenüber dem ID-Token 106 gebildeten Vertrauensankers. Von besonderem Vorteil ist ferner, dass eine zentrale Speicherung der Attribute verschiedener Nutzer 102 nicht erforderlich ist, sodass die im Stand der Technik bestehenden Datenschutzprobleme hiermit gelöst sind. Was die Bequemlichkeit der Anwendung des Verfahrens betrifft, ist von besonderem Vorteil, dass eine vorherige Registrierung des Nutzers 102 zur Inanspruchnahme des ID-Provider-Computersystems 136 nicht erforderlich ist.

Von weiterem besonderen Vorteil ist, dass durch das ID-Provider-Computersystem 136 kein Profil hinsichtlich der Nutzung des Soft-Tokens 158 erstellt werden kann, da die Nutzung des Soft-Tokens 158 nicht das ID-Provider-Computersystem 136 involviert.

Die Figur 2 zeigt eine solche Nutzung des Soft-Tokens 158 mit Hilfe des Geräts 164 gegenüber dem Dienst-Computersystem 150. Beispielsweise startet der Nutzer 102 den Internetbrowser seines Geräts 164, gibt eine URL des Dienst-Computersystems 150 ein, um eine Web-Seite zu laden, und wählt dann auf dieser Web-Seite einen Dienst aus. Durch Betätigung der Eingabetaste wird durch das Gerät 164 eine entsprechende Dienst-Anforderung 190 generiert und über das Netzwerk 116 zu dem Dienst-Computersystem 150 übertragen. Das Dienst-Computersystem 150 antwortet darauf mit einer zweiten Attributspezifizierung 192, in der diejenigen Attribute spezifiziert sind, deren Attributwerte das Dienst-Computersystem 150 benötigt, um den angeforderten Dienst erbringen zu können.

Aufgrund des Empfangs der Attributspezifizierung 192 durch das Gerät 164 wird dann die Ausführung der Programminstruktionen 176 gestartet, um den zweiten ID-Token 178 zu generieren. Hierzu wird durch Ausführung der Programminstruktionen 176 auf den in dem Speicher 168 gespeicherten Soft-Token 158 zugegriffen. Der Soft-Token 158 wird als Datenquelle verwendet, um die in der Attributspezifizierung 192 angegebenen Attribute und deren Signaturen aus dem Soft-Token 158 auszulesen und in dem Soft-Token 178 zusammenzufassen. Voraussetzung hierfür kann sein, dass der Nutzer 102 über die Nutzer-Schnittstelle des Geräts 164 eine entsprechende Kennung, insbesondere eine TAN, eingibt, um sich gegenüber dem Soft-Token 158 zu authentifizieren.

Der Soft-Token 178 wird dann von dem Gerät 164 über das Netzwerk 116 an das Dienst-Computersystem 150 gesendet. Durch Ausführung der Programminstruktionen 180 prüft das Dienst-Computersystem 150 dann, ob die Signaturen der zeitgestempelten Attribute des Soft-Tokens 178 valide sind. Ferner wird durch Ausführung der Programminstruktionen 182 mit Hilfe der Zeitbasis 184 geprüft, ob die Gültigkeitsdauer, die durch die Zeitstempel der Attribute gegeben ist, noch nicht überschritten ist. Wenn sowohl die Signaturen valide sind, als auch die Gültigkeitsdauer nicht überschritten ist, so kann das Dienst-Computersystem 150 anschließend den angeforderten Dienst erbringen, sofern die Attributwerte die hierfür erforderlichen Kriterien erfüllen.

Die Figur 2 zeigt eine Ausführungsform eines erfindungsgemäßen Verfahrens. In dem Schritt 200 wird das Signal von dem Nutzer-Computersystem an das Dienst-Computersystem gesendet. Beispielsweise startet der Nutzer hierzu einen InternetBrowser des Nutzer-Computersystems und gibt eine URL zum Aufruf einer Web-Seite des ID-Provider-Computersystems ein. In die aufgerufene Web-Seite gibt der Nutzer dann seine Anforderung für die Erzeugung des ersten Soft-Tokens ein..

Der Nutzer kann dabei ein oder mehrere Attribute spezifizieren. Insbesondere kann der Nutzer solche Attribute spezifizieren, welche die digitale Identität des Nutzers bestimmen.

Um dem ID-Provider-Computersystem die Möglichkeit zu geben, Attribute aus seinem ID-Token auszulesen, authentifiziert sich der Nutzer in dem Schritt 206 gegenüber dem ID-Token.

In dem Schritt 208 wird eine Verbindung zwischen dem ID-Token und dem ID-Provider-Computersystem aufgebaut. Hierbei handelt es sich vorzugsweise um eine gesicherte Verbindung, beispielsweise nach einem so genannten Secure Messaging-Verfahren.

In dem Schritt 210 erfolgt zumindest eine Authentifizierung des ID-Provider-Computersystems gegenüber dem ID-Token über die in dem Schritt 208 aufgebaute Verbindung. Zusätzlich kann eine Authentifizierung auch des ID-Tokens gegenüber dem ID-Provider-Computersystem vorgesehen sein.

Nachdem sowohl der Nutzer als auch das ID-Provider-Computersystem erfolgreich gegenüber dem ID-Token authentifiziert worden sind, erhält das ID-Provider-Computersystem von dem ID-Token die Zugriffsberechtigung zum Auslesen der Attribute. In dem Schritt 212 sendet das ID-Provider-Computersystem ein oder mehrere Lesekommandos zum Auslesen der gemäß Attributspezifikation erforderlichen Attribute aus dem ID-Token. Die Attribute werden dann mittels Ende-zu-Ende-Verschlüsselung über die gesicherte Verbindung an das ID-Provider-Computersystem übertragen und dort entschlüsselt.

Die ausgelesenen Attributwerte werden in dem Schritt 213 von dem ID-Provider-Computersystem mit einem Zeitstempel versehen und in dem Schritt 214 von dem ID-Provider-Computersystem signiert. Hierdurch wird der erste Soft-Token erzeugt.

In dem Schritt 216 sendet das ID-Provider-Computersystem den ersten Soft-Token über das Netzwerk. Der erste Soft-Token erreicht das Gerät entweder direkt oder über das Nutzer-Computersystem.

Im letzteren Fall kann der Nutzer die Möglichkeit haben, die signierten Attributwerte des ersten Soft-Tokens zur Kenntnis zu nehmen und/oder durch weitere Daten zu ergänzen. Es kann vorgesehen sein, dass die signierten Attributwerte gegebenenfalls mit den ergänzten Daten erst nach Freigabe durch den Nutzer von dem Nutzer-Computersystem an das Gerät weitergeleitet werden. Hierdurch ist größtmögliche Transparenz für den Nutzer hinsichtlich des von dem ID-Provider-Computersystem erzeugten Soft-Tokens hergestellt.

In dem Schritt 218 wird der erste Soft-Token in einem Speicher des Geräts gespeichert.

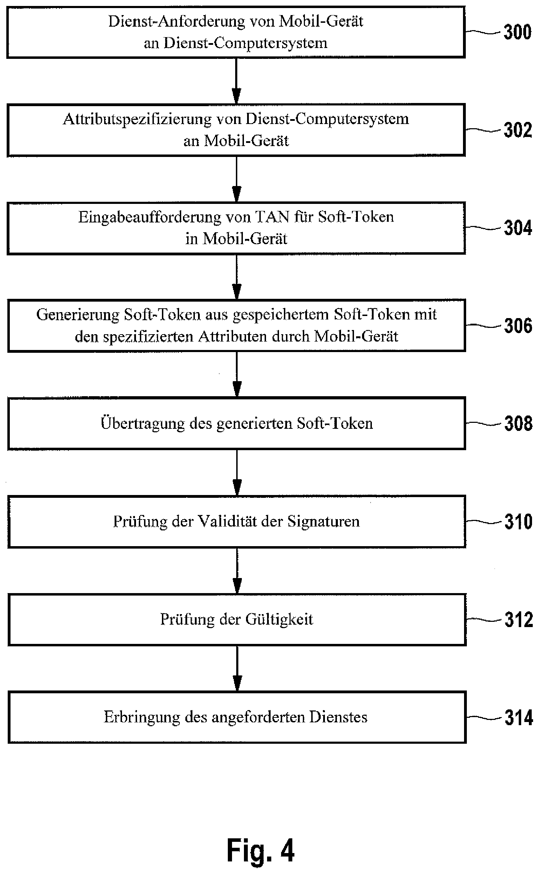

Die Figur 4 zeigt eine Ausführungsform eines erfindungsgemäßen Verfahrens zur Verwendung des ersten Soft-Tokens. In dem Schritt 300 wird von dem Gerät an ein Dienst-Computersystem eine Dienst-Anforderung gesendet, um die Erbringung eines von dem Dienst-Computersystem bereitgestellten Onlinedienstes gegenüber dem Gerät anzufordern. In dem Schritt 302 antwortet das Dienst-Computersystem hierauf mit einer Attributspezifizierung, die das Dienst-Computersystem an das Gerät sendet. Die Attributspezifizierung beinhaltet eine Angabe derjenigen Attribute, deren Attributwerte das Dienst-Computersystem für die Erbringung des angeforderten Dienstes benötigt.

Nach dem Empfang der Attributspezifizierung durch das Gerät wird von dem Gerät eine Eingabeaufforderung für den Nutzer generiert, um diesen zur Eingabe von Authentifizierungsdaten, wie z.B. einer TAN, aufzufordern, um sich gegenüber dem in dem Gerät gespeicherten ersten Soft-Token zu authentifizieren. Unter der Voraussetzung, dass diese Authentifizierung in dem Schritt 304 erfolgreich durchgeführt worden ist, wird dann in dem Schritt 306 ein zweiter Soft-Token aus dem gespeicherten ersten Soft-Token erzeugt. Der zweite Soft-Token beinhaltet eine durch die von dem Dienst-Computersystem empfangene Attributspezifizierung gegebene Auswahl der signierten und zeitgestempelten Attribute des ersten Soft-Tokens. Wenn durch die Attributspezifizierung sämtliche der Attribute des ersten Soft-Tokens angegeben werden, handelt es sich also bei dem zweiten Soft-Token um eine Kopie des ersten Soft-Tokens.

Der zweite Soft-Token wird dann von dem Gerät in dem Schritt 308 an das Dienst-Computersystem übertragen. Das Dienst-Computersystem prüft dann in dem Schritt 310 die Validität der Signaturen der zeitgestempelten Attributwerte sowie in dem Schritt 312, ob die Gültigkeitsdauer noch nicht überschritten ist. In dem Schritt 314 kann dann der angeforderte Dienst von dem Dienst-Computersystem gegenüber dem Gerät erbracht werden, wenn die Signaturen valide sind, die Gültigkeitsdauer nicht überschritten ist und wenn ferner die Attributwerte die für die Erbringung des Dienstes vorgegebene Kriterien erfüllen.

### Bezugszeichenliste

- 100: Nutzer-Computersystem
- 102: Nutzer
- 104: Schnittstelle
- 106: ID-Token
- 108: Schnittstelle
- 110: Prozessor
- 112: Programminstruktionen
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 125: Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Programminstruktionen
- 147: Programminstruktionen
- 148: Programminstruktionen
- 149: Programminstruktionen
- 150: Dienst-Computersystem
- 151: Programminstruktionen
- 152: Netzwerk-Schnittstelle
- 154: Prozessor
- 156: Programminstruktionen
- 158: Soft-Token
- 160: Attribute
- 162: Zeitbasis
- 164: Gerät
- 166: Schnittstelle
- 168: Speicher
- 170: Prozessor
- 172: Programminstruktionen
- 174: Anzeige
- 176: Programminstruktionen
- 178: Soft-Token
- 180: Programminstruktionen
- 182: Programminstruktionen
- 184: Zeitbasis
- 186: Signal
- 188: Verbindung
- 190: Dienst-Anforderung
- 192: Attributspezifizierung

## Patentansprüche

1. Verfahren zum Lesen mehrerer in einem ID-Token (106, 106') gespeicherter Attribute, wobei der ID-Token einem Nutzer (102) zugeordnet ist, mit folgenden Schritten:
- Authentifizierung des Nutzers gegenüber dem ID-Token,
- Authentifizierung eines ersten Computersystems (136) gegenüber dem ID-Token,
- nach erfolgreicher Authentifizierung des Nutzers und des ersten Computersystems gegenüber dem ID-Token, Lesezugriff des ersten Computersystems auf mehrere in dem ID-Token gespeicherte Attribute, Erzeugung eines ersten Soft-Tokens (158) durch Signierung der aus dem ID-Token gelesenen Attribute durch das erste Computersystem, Senden des ersten Soft-Tokens zu einem Gerät (164), und
- Zeitstempelung von jedem der durch das erste Computersystem ausgelesenen Attribute, wobei die Erzeugung des ersten Soft-Tokens durch separate Signierung von jedem einzelnen der zeitgestempelten Attribute erfolgt und
- Speicherung des ersten Soft-Tokens (158) in einer SIM-Karte des Geräts (164).

2. Verfahren nach Anspruch 1, wobei die Authentifizierung des ersten Computersystems gegenüber dem ID-Token mit Hilfe eines Zertifikats (144) des ersten Computersystems erfolgt, wobei das Zertifikat eine Angabe derjenigen in dem ID-Token gespeicherten Attribute beinhaltet, für welche das erste Computersystem für den Lesezugriff berechtigt ist, wobei vorzugsweise der ID-Token die Leseberechtigung des ersten Computersystems für den Lesezugriff auf zumindest eines der Attribute mit Hilfe des Zertifikats überprüft.

3. Verfahren nach einem der vorhergehenden Ansprüche, wobei der erste Soft-Token und/oder ein aus dem ersten Soft-Token abgeleiteter zweiter Soft-Token (178), der eine Teilmenge der Attribute des ersten Soft-Tokens enthält, von dem Gerät an ein zweites Computersystem (150) übertragen wird.

4. Verfahren nach Anspruch 3, mit folgenden weiteren Schritten: Senden eines Signals (186) von einem dritten Computersystem (100) an das erste Computersystem, wobei das Signal eine Adresse des Geräts beinhaltet, wobei der erste Soft-Token an die Adresse des Geräts gesendet wird, wobei das Signal vorzugsweise eine erste Attributspezifizierung von einem oder mehreren durch das erste Computersystem zur Erzeugung des ersten Soft-Tokens auszulesenden Attributen beinhaltet.

5. Verfahren nach Anspruch 4, wobei die von dem ersten Computersystem aus dem ID-Token gelesenen Attribute an das dritte Computersystem gesendet werden, von wo sie nach Freigabe durch den Nutzer an das zweite Computersystem weitergeleitet werden, wobei der Nutzer die Attribute vor der Weiterleitung an das zweite Computersystem vorzugsweise durch weitere Daten ergänzen kann.

6. Verfahren nach Anspruch 4 oder 5, wobei das erste Computersystem mehrere der Zertifikate (144.1; 144.2) mit unterschiedlichen Leserechten aufweist, wobei das erste Computersystem aufgrund des Empfangs der ersten Attributspezifizierung zumindest eines der Zertifikate auswählt, welches die zum Lesen der in der ersten Attributspezifizierung spezifizierten Attribute ausreichenden Leserechte aufweist.

7. Verfahren nach einem der Ansprüche 4 bis 6, wobei die Generierung des ersten Soft-Tokens so erfolgt, dass dessen Verwendung die Eingabe einer Kennung voraussetzt, wobei es sich bei der Kennung insbesondere um ein Passwort, eine PIN oder eine TAN handeln kann.

8. Verfahren nach einem der Ansprüche 4 bis 7, wobei zwischen dem ersten Computersystem und dem ID-Token eine erste Verbindung (188) aufgebaut wird, über die die Attribute zu dem ersten Computersystem übertragen werden, wobei die erste Verbindung mit einer Ende-zu-Ende-Verschlüsselung geschützt ist, wobei zur Authentifizierung des ersten Computersystems und des ID-Tokens vorzugsweise ein Challenge-Response-Verfahren durchgeführt wird, wobei aus einer für das Challenge-Response-Verfahren verwendeten Challenge ein symmetrischer Schlüssel für die Ende-zu-Ende-Verschlüsselung der ersten Verbindung abgeleitet wird, wobei vorzugsweise der erste Soft-Token von dem ersten Computersystem über das dritte Computersystem (100) an das Gerät gesendet wird.

9. Verfahren nach einem der vorhergehenden Ansprüche, wobei jeder der Zeitstempel eine Gültigkeitsdauer für den ersten Soft-Token angibt.

10. Verfahren nach einem der Ansprüche 3 bis 8, mit folgenden weiteren Schritten:
- Senden einer Dienst-Anforderung (190) von dem Gerät an das zweite Computersystem,
- Senden einer zweiten Attributspezifizierung (192) von dem zweiten Computersystem an das Gerät, wobei die zweite Attributspezifizierung ein oder mehrere Attribute spezifiziert,
- Erzeugung eines zweiten Soft-Tokens (178) durch das Gerät mit Hilfe des ersten Soft-Tokens, wobei der zweite Soft-Token eine durch die Attributspezifizierung gegebene Teilmenge der Attribute des ersten Soft-Tokens beinhaltet,
- Übertragung des zweiten Soft-Tokens von dem Gerät an das zweite Computersystem.

11. Verfahren nach Anspruch 10, mit folgenden weiteren Schritten:
- Prüfung der Validität der Signatur oder der Signaturen des zweiten Soft-Tokens,
- Prüfung anhand des Zeitstempels, ob die Gültigkeitsdauer des zweiten Soft-Tokens noch nicht abgelaufen ist,
- falls die Signatur bzw. die Signaturen valide sind und die Gültigkeitsdauer nicht abgelaufen ist, Erbringung des in der Dienst-Anforderung angeforderten Dienstes, sofern die Attribute des zweiten Soft-Tokens ein oder mehrere Kriterien erfüllen, die eine Voraussetzung für die Erbringung des Dienstes sind.

12. Computerprogrammprodukt mit von einem Computersystem ausführbaren Instruktionen zur Durchführung eines Verfahrens nach einem der vorhergehenden Ansprüche.

13. Computersystem mit
- Mitteln (138) zum Empfang eines Signals (186),
- Mitteln (142, 144, 146) zur Authentifizierung gegenüber einem ID-Token (106),
- Mitteln (138) zum Empfang mehrerer Attribute aus dem ID-Token über eine geschützte Verbindung,
- Mitteln (147) zum Zeitstempeln jedes empfangenen Attributs,
- Mitteln (151) zur Erzeugung eines ersten Soft-Tokens, der die signierten zeitgestempelten Attribute beinhaltet,
- Mitteln (138) zum Senden des ersten Soft-Tokens,
- Mitteln (166) zum Empfangen des Soft-Tokens in einem Gerät (164),
- Mitteln (168) zum Speichern des Soft-Tokens in einer SIM-Karte des Gerätes,
wobei der Empfang der Attribute voraussetzt, dass sich ein dem ID-Token zugeordneter Nutzer und das Computersystem gegenüber dem ID-Token authentifiziert haben und mit Mitteln zur Generierung einer Anforderung an den Nutzer zur Authentifizierung gegenüber dem ID-Token aufgrund des Empfangs der Attributspezifikation.

14. Computersystem nach Anspruch 13, wobei das Signal (186) eine erste Attributspezifikation beinhaltet, und wobei die Mittel zum Senden des ersten Soft-Tokens zur Übertragung des ersten Soft-Tokens über eine geschützte Verbindung (188) mit Ende-zu-Ende Verschlüsselung zu dem ID-Token ausgebildet sind.

## Claims

1. A method for reading a plurality of attributes stored in an ID token (106, 106'), wherein the ID token is assigned to a user (102), said method comprising the following steps:
- authenticating the user to the ID token,
- authenticating a first computer system (136) to the ID token,
- following successful authentication of the user and of the first computer system to the ID token, enabling read access of the first computer system to a plurality of attributes stored in the ID token, generating a first soft token (158) by signing by means of the first computer system of the attributes read from the ID token, sending of the first soft token to a device (164), and
- time-stamping each of the attributes read by the first computer system, wherein the first soft token is generated by separate signing of each of the individual time-stamped attributes, and
- storing the first soft token (158) in a SIM card of the device (164).

2. The method according to claim 1, wherein the first computer system is authenticated to the ID token with the aid of a certificate (144) of the first computer system, wherein the certificate includes a specification of those attributes stored in the ID token for which the first computer system is authorised for read access, wherein the ID token preferably checks the read authorisation of the first computer system for the read access to at least one of the attributes with the aid of the certificate.

3. The method according to either one of the preceding claims, wherein the first soft token and/or a second soft token (178) derived from the first soft token and which contains a subset of the attributes of the first soft token are/is transmitted from the device to a second computer system (150).

4. The method according to claim 3, comprising the following further steps: sending a signal (186) from a third computer system (100) to the first computer system, wherein the signal contains an address of the device, wherein the first soft token is sent to the address of the device, wherein the signal preferably includes a first attribute specification of one or more attributes to be read by the first computer system in order to generate the first soft token.

5. The method according to claim 4, wherein the attributes read by the first computer system from the ID token are sent to the third computer system, from where they are forwarded to the second computer system following release by the user, wherein the user can supplement the attributes preferably by further data prior to the forwarding to the second computer system.

6. The method according to claim 4 or 5, wherein the first computer system has a plurality of the certificates (144.1; 144.2) with different read rights, wherein the first computer system, on account of the receipt of the first attribute specification, selects at least one of the certificates, which has the read rights sufficient to read the attributes specified in the first attribute specification.

7. The method according to any one of claims 4 to 6, wherein the first soft token is generated such that use thereof presupposes the input of an identifier, wherein the identifier in particular can be a password, a PIN or a TAN.

8. The method according to any one of claims 4 to 7, wherein a first connection (188) is established between the first computer system and the ID token, via which connection the attributes are transmitted to the first computer system, wherein the first connection is protected with end-to-end encryption, wherein a challenge-response method is preferably performed for authentication of the first computer system and of the ID token, wherein a symmetrical key for the end-to-end encryption of the first connection is derived from a challenge used for the challenge-response method, wherein the first soft token is preferably sent from the first computer system to the device via the third computer system (100).

9. The method according to any one of the preceding claims, wherein each of the timestamps specifies a period of validity for the soft token.

10. The method according to any one of claims 3 to 8, comprising the following further steps:
- sending a service request (190) from the device to the second computer system,
- sending a second attribute specification (192) from the second computer system to the device, wherein the second attribute specification specifies one or more attributes,
- generating a second soft token (178) by the device with the aid of the first soft token, wherein the second soft token includes a subset of the attributes of the first soft token given by the attribute specification,
- transmitting the second soft token from the device to the second computer system.

11. The method according to claim 10, comprising the following further steps:
- checking the validity of the signature or the signatures of the second soft token,
- checking, on the basis of the timestamp, whether the period of validity of the second soft token has expired,
- if the signature or the signatures is/are valid and the period of validity has not yet expired, providing the service requested in the service request, if the attributes of the second soft token satisfy one or more criteria which are a prerequisite for the provision of the service.

12. A computer program product with instructions which can be executed by a computer system in order to carry out a method according to any one of the preceding claims.

13. A computer system comprising
- means (138) for receiving a signal (186),
- means (142, 144, 146) for performing an authentication to an ID token (106),
- means (138) for receiving a plurality of attributes from the ID token via a protected connection,
- means (147) for time-stamping each received attribute,
- means (151) for generating a first soft token, which includes the signed time-stamped attributes,
- means (138) for sending the first soft token,
- means (166) for receiving the soft token in a device (164),
- means (168) for storing the soft token in a SIM card of the device,
wherein the receipt of the attributes presupposes that a user assigned to the ID token and the computer system have been authenticated to the ID token, and comprising means for generating a request to the user for authentication to the ID token on account of the receipt of the attribute specification.

14. The computer system according to claim 13, wherein the signal (186) includes a first attribute specification, and wherein the means for sending the first soft token are designed to transmit the first soft token to the ID token via a protected connection (188) with end-to-end encryption.

## Revendications

1. Procédé de lecture de plusieurs attributs stockés dans un jeton d'identification (106, 106'), où le jeton d'identification est associé à un utilisateur (102), avec les étapes suivantes :
- authentification de l'utilisateur vis-à-vis du jeton d'identification,
- authentification d'un premier système informatique (136) vis-à-vis du jeton d'identification,
- après une authentification réussie de l'utilisateur et du premier système informatique par rapport au jeton d'identification, accès en lecture du premier système informatique à plusieurs attributs stockés dans le jeton d'identification, création d'un premier jeton Soft (158) par la signature des attributs lus à partir du jeton d'identification par le premier système informatique, envoi du premier jeton soft vers un appareil (164), et
- horodatage de chacun des attributs lus par le premier système informatique, où la création du premier jeton soft a lieu par une signature séparée de chacun des attributs horodatés individuel, et
- stockage du premier jeton soft (158) dans une carte SIM de l'appareil (164).

2. Procédé selon la revendication 1, dans lequel l'authentification du premier système informatique vis-à-vis du jeton d'identification a lieu à l'aide d'un certificat (144) du premier système informatique, où le certificat contient une indication des attributs stockés dans le jeton d'identification pour lesquels le premier système informatique est autorisé à l'accès en lecture, où de préférence, le jeton d'identification vérifie l'autorisation en lecture du premier système informatique pour l'accès en lecture à l'au moins un des attributs à l'aide du certificat.

3. Procédé selon l'une des revendications précédentes, dans lequel le premier jeton soft et/ou un deuxième jeton soft (178) dérivé à partir du premier jeton soft, qui contient une partie de l'attribut du premier jeton soft, est (sont) transmis de l'appareil vers un deuxième système informatique (150).

4. Procédé selon la revendication 3, avec les autres étapes suivantes : envoi d'un signal (186) d'un troisième système informatique (100) vers le premier système informatique, où le signal contient une adresse de l'appareil, où le premier jeton soft est envoyé à l'adresse de l'appareil, où le signal contient de préférence une première spécification d'attribut d'un ou de plusieurs attributs lisibles par le premier système informatique pour la création du premier jeton soft.

5. Procédé selon la revendication 4, dans lequel les attributs lus par le premier système informatique à partir du jeton d'identification sont envoyés au troisième système informatique, d'où ils sont transmis vers le deuxième système informatique après la libération par l'utilisateur, où l'utilisateur peut compléter, de préférence par de nouvelles données, les attributs avant la transmission vers le deuxième système informatique.

6. Procédé selon la revendication 4 ou 5, dans lequel le premier système informatique présente plusieurs parmi les certificats (144.1 ; 144.2) avec des accès en lecture différents, où le premier système informatique, en raison de la première spécification d'attribut, choisit au moins l'un des certificats, lequel présente les droits de lecture suffisants pour la lecture des attributs spécifiés dans la première spécification d'attributs.

7. Procédé selon l'une des revendications 4 à 6, dans lequel la génération du premier jeton soft a lieu, de sorte que son utilisation suppose l'indication d'une identification, où, dans le cas de l'identification, il peut s'agir notamment d'un mot de passe, d'un code PIN ou TAN.

8. Procédé selon l'une des revendications 4 à 7, dans lequel une première connexion (188) est établie entre le premier système informatique et le jeton d'identification, par laquelle les attributs sont transmis vers le premier système informatique, où la première connexion est protégée par un chiffrement de bout en bout, où, pour l'authentification du premier système informatique et du jeton d'identification, de préférence, un procédé de défis-réponses est effectué, où, à partir des défis employés pour le procédé défis-réponses une clé symétrique est dérivée pour le chiffrement de bout en bout de la première connexion, où, de préférence, le premier jeton soft est envoyé par le premier système informatique vers l'appareil par le biais du troisième système informatique (100).

9. Procédé selon l'une des revendications précédentes, dans lequel chacun des horodatages indique une durée de validité pour le premier jeton soft.

10. Procédé selon l'une des revendications 4 à 8, avec les autres étapes suivantes :
- envoi d'une exigence de service (190) depuis l'appareil vers le deuxième système informatique,
- envoi d'une deuxième spécification d'attribut (192) du deuxième système informatique vers l'appareil, où la deuxième spécification d'attribut spécifie un ou plusieurs attributs,
- création d'un deuxième jeton soft (176) par l'appareil à l'aide du premier jeton soft, où le deuxième jeton soft contient une partie des attributs du premier jeton soft donnée par la spécification d'attributs,
- transmission du deuxième jeton soft de l'appareil vers le deuxième système informatique.

11. Procédé selon la revendication 10, avec les autres étapes suivantes :
- vérification de la validité de la signature ou des signatures du deuxième jeton soft,
- vérification, à l'aide de l'horodatage, si la durée de validité du deuxième jeton soft n'est pas dépassée,
- dans le cas où la signature, respectivement, les signatures, sont valides et que la durée de validité n'est pas dépassée, la réalisation du service exigé dans l'exigence de service, dans la mesure où les attributs du deuxième jeton soft remplissent un ou plusieurs critères, qui sont en faveur de la réalisation du service.

12. Produit de programme informatique avec des instructions exécutables par un système informatique pour l'exécution d'un procédé selon l'une des revendications précédentes.

13. Système informatique avec
- des moyens (138) pour la réception d'un signal (186),
- des moyens (142, 144, 146) pour l'authentification vis-à-vis d'un jeton d'identification (106),
- des moyens (138) pour la réception de plusieurs attributs à partir du jeton d'identification par le biais d'une connexion sécurisé,
- des moyens (147) pour l'horodatage de chaque attribut reçu,
- des moyens (151) pour la création d'un premier jeton soft qui contient les attributs horodatés signés,
- des moyens (138) pour l'envoi du premier jeton soft,
- des moyens (156) pour la réception du jeton soft dans un appareil (164),
- des moyens (168) pour le stockage du jeton soft dans une carte SIM de l'appareil,
où la réception des attributs prévoie qu'un utilisateur associé au jeton d'identification et le système informatique ont été authentifiés vis-à-vis du jeton d'identification, et avec des moyens pour la génération d'une exigence pour l'utilisateur pour l'authentification vis-à-vis du jeton d'identification en raison de la réception de la spécification d'attributs.

14. Système informatique selon la revendication 13, dans lequel le signal (186) contient une première spécification d'attribut, et dans lequel les moyens sont conçus pour l'envoi du premier jeton soft pour la transmission du premier jeton soft par le biais d'une connexion sécurisée (188) avec un chiffrement de bout en bout vis à vis du jeton d'identification.
